# EUROPÄISCHE PATENTANMELDUNG

(11) **EP 3 530 965 A1**
(43) Veröffentlichungstag der Anmeldung: **28.08.2019**
(21) Anmeldenummer: 18158797.3
(22) Anmeldetag: 27.02.2018
(51) Int. Cl.: F16B 37/06

(54) **ANORDNUNG VON EINEM HOHLKÖRPER UND EINEM VERSTEIFUNGSELEMENT, VERFAHREN ZUR HERSTELLUNG DER ANORDNUNG SOWIE VERSTEIFUNGSELEMENT**

(71) Anmelder: BBA S.r.l., 63076 Centobuchi di Monteprandone (AP) (IT)
(72) Erfinder: DURANTE, Mattia, Sant'Egidio alla vibrata (TE) 64016 (IT)
(74) Vertreter: Quermann, Helmut

(57) **Zusammenfassung**

Die Erfindung betrifft eine Anordnung, aufweisend einen Hohlkörper (5) und einem Versteifungselement (1) zum Versteifen von zwei beabstandet angeordneten, gegenüberliegenden Wandungen (6, 7) des Hohlkörpers (5). Ferner betrifft die Erfindung ein Verfahren zur Herstellung einer derartigen Anordnung. Des Weiteren betrifft die Erfindung ein Versteifungselement (1).

Die Anordnung weist einen Hohlkörper (5) auf, wobei der Hohlkörper (5) zwei beabstandet angeordnete, gegenüberliegende Wandungen (6, 7) aufweist, wobei die eine Wandung (6) der zwei Wandungen (6, 7) eine erste Durchgangsöffnung und die andere Wandung (7) der zwei Wandungen (6, 7) eine der ersten Durchgangsöffnung in einer axialen Richtung (Z) gegenüberliegende zweite Durchgangsöffnung aufweist, Weiterhin weist die Anordnung ein Versteifungselement (1) auf, wobei das Versteifungselement (1) einen Kopfabschnitt (2) und einen in einer axialen Richtung (Z) des Versteifungselements (1) an den Kopfabschnitt (2) angrenzenden Schaft (3) aufweist, wobei der Kopfabschnitt (2) einen größeren Außendurchmesser als die erste Durchgangsöffnung aufweist, wobei der Schaft (3) die erste Durchgangsöffnung und die zweite Durchgangsöffnung durchsetzt, wobei der Kopfabschnitt (2) auf einer der anderen Wandung (7) abgewandten Seite der einen Wandung (6) angeordnet ist, wobei das Versteifungselement (1) einen in dem Schaft (3) ausgebildeten Schließkopf (8) aufweist, wobei der Schließkopf (8) in einem Zwischenbereich zwischen der einen Wandung (6) und der anderen Wandung (7) ausgebildet ist, wobei das Versteifungselement (1) eine das Versteifungselement (1) in der axialen Richtung (Z) durchsetzende Durchgangsöffnung (9) zur Aufnahme eines die Durchgangsöffnung (9) des Versteifungselements (1) durchsetzenden Befestigungsmittels (10) aufweist, dadurch gekennzeichnet, dass das Versteifungselement (1) auf einer der einen Wandung (6) abgewandten Seite der anderen Wandung (7) gegenüber der anderen Wandung (7) in der axialen Richtung (Z) hervorsteht oder bündig mit der anderen Wandung (7) abschließt.

## Beschreibung

Die Erfindung betrifft eine Anordnung, aufweisend einen Hohlkörper und einem Versteifungselement zum Versteifen von zwei beabstandet angeordneten, gegenüberliegenden Wandungen des Hohlkörpers. Ferner betrifft die Erfindung ein Verfahren zur Herstellung einer derartigen Anordnung. Des Weiteren betrifft die Erfindung ein Versteifungselement.

In der Praxis ist es häufig notwendig, zwei in einer axialen Richtung beabstandete, gegenüberliegende Wandungen eines Hohlkörpers in der axialen Richtung zu versteifen, um zu vermeiden, dass bei Einwirken von axialen Kräften, beispielsweise infolge einer Befestigung eines weiteren Bauteils an diesem Körper, eine Verformung des Hohlkörpers zu vermeiden. Vorliegend wird unter Hohlkörper jedes Bauteil verstanden, welches zwei in einer axialen Richtung beabstandete Wandungen aufweist, folglich zwischen diesen beiden Wandungen ein Zwischenraum gebildet ist. Es ist durchaus denkbar, dass in dem Zwischenraum ein weiches, folglich nicht formstabiles Material, wie beispielsweise ein Isoliermaterial, insbesondere ein Schaumstoff, angeordnet ist. Der Hohlkörper braucht nicht notwendiger Weise vollumfänglich umschließende Wandungen aufzuweisen. Der Hohlkörper kann auch durchaus U-förmig ausgebildet sein, wobei die beiden Schenkel des U-förmigen Profils die in der axialen Richtung beabstandeten, gegenüberliegenden Wandungen bilden. Hinsichtlich einer Versteifung des Hohlkörpers ist es von Vorteil, wenn eine derartige Versteifung nachträglich in den Hohlkörper eingebracht werden kann, um den Hohlkörper lediglich in den Bereichen zu versteifen, in denen eine Versteifung benötigt wird, beispielsweise den Hohlkörper in einem Bereich zu versteifen, in dem ein Befestigungsmittel zwecks Befestigung eines weiteren Bauteils auf den Hohlkörper einwirkt. Dadurch können eigentlich nicht benötigte Versteifungen, beispielsweise in Form von Stützstreben, vermieden werden, was sich vorteilhaft auf das Herstellungsverfahren des Hohlkörpers und das Gewicht des Hohlkörpers bzw. das Gewicht der Anordnung auswirkt.

Aus der DE 44 32 956 A1 ist ein Blindnietelement bekannt, welches dazu geeignet ist, zwei beabstandet angeordnete, gegenüberliegende Wandungen eines Hohlkörpers zu versteifen. Das Blindnietelement weist einen Kopfabschnitt und einen in einer axialen Richtung des Blindnietelements an den Kopfabschnitt angrenzenden Schaft auf, wobei der Schaft ein Innengewinde und zwischen dem Innengewinde und dem Kopfabschnitt einen Verformungsabschnitt aufweist, wobei der Kopfabschnitt einen größeren Außendurchmesser als der Schaft aufweist. Eine Wandung des Schafts weist im Bereich des ersten Verformungsabschnitts eine Schwächung auf, zur Ausbildung eines Schließkopfes in einem Zwischenbereich zwischen der einen Wandung der zwei Wandungen und der anderen Wandung der zwei Wandungen. In einem in den Hohlkörper gesetzten Zustand des Blindnietelements ist die erste Wandung zwischen dem Kopfabschnitt und dem Schließkopf des Blindnietelements eingeklemmt. Das Blindnietelement weist an seinem dem Kopfabschnitt abgewandten Ende einen sich über den äußeren Umfang erstreckenden Absatz mit einer ringförmigen Auflagefläche und einer mantelförmigen Anlagefläche auf, wobei in einem gesetzten Zustand des Blindnietelements die zweite Wandung mit ihrer der ersten Wandung zugewandten Seite an der ringförmigen Auflagefläche anliegt. Zwecks Befestigung eines weiteren Bauteils an dem Hohlkörper wird von der dem Kopfabschnitt abgewandten Seite eine das weitere Bauteil durchsetzende Kopfschraube in ein im Bereich des Schafts ausgebildetes Innengewinde des Blindnietelements eingeschraubt, wobei die mit ihrem Gewindebolzen in das Innengewinde eingeschraubte Kopfschraube den zweiten Wandabschnitt gegen die ringförmige Auflagefläche drückt. Nachteilig bei einer derartigen Anordnung ist, dass beim Anziehen der Kopfschraube Torsionskräfte auf das Blindnietelement einwirken, wobei die Gefahr besteht, dass sich das Blindnietelement in beim Anziehen der Schraube mit dreht und somit ein Anziehen der Schraube nicht möglich ist. Auch kann es durch das Mitdrehen des Blindnietelements zu einer Beschädigung der Wandung des Hohlkörpers kommen, insbesondere, wenn es sich bei dem Material der Wandung um ein relativ zu dem Material des Blindnietelements weiches Material, beispielsweise ein Leichtbaumaterial wie faserverstärktem Kunststoff oder Kunststoff handelt.

Die in der DE 44 32 956 A1 offenbarte mittels des Blindnietelements gebildete Anordnung weist die Merkmale des Oberbegriffs des Patentanspruchs 1 und des Patentanspruchs 3 auf. Ferner weist das in der DE 44 32 956 A1 offenbarte Blindnietelement die Merkmale des Oberbegriffs des Patentanspruchs 12 auf.

Aufgabe der vorliegenden Erfindung ist es, eine Anordnung, die die Merkmale des Oberbegriffs des Patentanspruchs 1 bzw. des Patentanspruchs 3 aufweist, so weiterzubilden, dass diese bei geringem Fertigungs- und Materialaufwand den Hohlkörper selektiv in einem Bereich versteift, um in diesem Bereich ein Befestigungsmittel einzubringen, wobei eine Beschädigung der Wandungen des Hohlkörpers aufgrund der durch das eingebrachte Befestigungsmittel aufgebrachten Kräfte vermieden wird. Ferner ist es Aufgabe der Erfindung, Verfahren zur Herstellung derartiger Anordnungen anzugeben. Weiterhin ist es Aufgabe der Erfindung, ein geeignetes Versteifungselement zur Durchführung eines solchen Verfahrens anzugeben.

Diese Aufgaben werden durch eine Anordnung, welche die Merkmale des Patentanspruchs 1 oder die Merkmale des Patentanspruchs 3 aufweist, ein Verfahren, welches die Merkmale des Patentanspruchs 9 oder die Merkmale des Patentanspruchs 10 aufweist, sowie ein Versteifungselement, welches die Merkmale des Patentanspruchs 12 aufweist, gelöst.

Die Anordnung weist einen Hohlkörper auf, wobei der Hohlkörper zwei beabstandet angeordnete, gegenüberliegende Wandungen aufweist, wobei die eine Wandung der zwei Wandungen eine erste Durchgangsöffnung und die andere Wandung der zwei Wandungen eine der ersten Durchgangsöffnung in einer axialen Richtung gegenüberliegende zweite Durchgangsöffnung aufweist. Ferner weist die Anordnung ein Versteifungselement zum Versteifen des Hohlkörpers in der axialen Richtung auf. Das Versteifungselement weist einen Kopfabschnitt und einen in einer axialen Richtung des Versteifungselements an den Kopfabschnitt angrenzenden Schaft auf, wobei der Kopfabschnitt einen größeren Außendurchmesser als die erste Durchgangsöffnung aufweist. Der Schaft durchsetzt die erste Durchgangsöffnung und die zweite Durchgangsöffnung, wobei der Kopfabschnitt auf einer der anderen Wandung abgewandten Seite der einen Wandung angeordnet ist. Dabei ist es auch durchaus denkbar, dass der Kopfabschnitt auf einer der anderen Wandung abgewandten Seite der einen Wandung in der axialen Richtung bündig mit der einen Wandung abschließt. Das Versteifungselement weist einen in dem Schaft ausgebildeten Schließkopf auf, wobei der Schließkopf in einem Zwischenbereich zwischen der einen Wandung und der anderen Wandung ausgebildet ist. Das Versteifungselement weist eine das Versteifungselement in der axialen Richtung durchsetzende Durchgangsöffnung zur Aufnahme eines die Durchgangsöffnung des Versteifungselements durchsetzenden Befestigungsmittels auf. Das Befestigungsmittel ist vorzugsweise derart ausgebildet, dass das Befestigungsmittel auf den einander abgewandten Seiten der zwei Wandungen jeweils ein Anschlagselement aufweist, wobei zwecks Verspannen des Befestigungsmittels gegen den Hohlkörper das eine Anschlagselement gegenüber dem anderen Anschlagselement in der axialen Richtung verstellbar ist. Bei dem Befestigungsmittel kann es sich beispielsweise um eine Schrauben-Mutter-Anordnung oder eine Anordnung von einem Gewindestab und zwei Muttern handeln.

Um bei einem Anziehen des Befestigungsmittels, insofern bei einer Verspannung des Befestigungsmittels gegenüber dem Hohlkörper, eine Beschädigung der zwei Wandungen des Hohlkörpers zu vermeiden, steht das Versteifungselement auf einer der einen Wandung abgewandten Seite der anderen Wandung gegenüber der anderen Wandung in der axialen Richtung hervor oder schließt auf der der einen Wandung abgewandten Seite der anderen Wandung in der axialen Richtung bündig mit der anderen Wandung ab. Dadurch wird gewährleistet, dass die Krafteinwirkung des Befestigungsmittels ausschließlich oder zumindest im Wesentlichen in das Versteifungselement eingeleitet wird, wodurch eine Verformung des Hohlkörpers oder gar einer Beschädigung der Wandungen des Hohlkörpers vermieden wird, da die Wandungen des Hohlkörpers beim Anziehen der Schraube gar nicht oder nur in geringem Maße mit einer Kraft beaufschlagt werden. Dadurch ist es möglich, die Wandungen des Hohlkörpers aus einem dünnen oder weniger formstabilen Material zu fertigen und insbesondere auf zusätzliche axiale Versteifungszonen im Bereich zwischen den beiden Wandungen zu verzichten, da mittels des Versteifungselements eine selektive axiale Versteifung des Hohlkörpers, das heißt eine Versteifung in einem Bereich, in dem tatsächlich axiale Kräfte aufgrund eines Befestigungsmittels in den Hohlkörper eingebracht werden, gebildet wird. Diese Art der Versteifung ist insbesondere dann von Vorteil, wenn es sich bei dem Material der Wandungen um ein eher weiches Material wie beispielsweise um einen Kunststoff oder um einen faserverstärktem Kunststoff handelt. Oder die Wandungen eine geringe Materialstärke aufweisen zwecks Einsparung von Material und/oder Gewicht.

Der Bereich des gegenüber der anderen Wandung hervorstehenden Bereichs des Schafts weist vorzugsweise eine axiale Abmessung auf, die zwischen 0% und 10% des Durchmessers des Schafts beträgt.

Da die eine Wandung zwischen dem Kopfabschnitt und dem Schließkopf des Versteifungselements angeordnet ist, ist das Versteifungselement in dem Hohlkörper verliersicher gehalten.

Als besonders vorteilhaft wird es angesehen, wenn der Kopfabschnitt die eine Wandung kontaktiert und der Schließkopf die eine Wandung auf der dem Kopfabschnitt abgewandten Seite kontaktiert. Folglich ist das Versteifungselement klemmend in der einen Wandung gehalten.

Eine zu den vorgenannten Ausführungsformen alternative Anordnung zur Lösung des Problems ist wie folgt ausgebildet:
Die Anordnung weist einen Hohlkörper auf, wobei der Hohlkörper zwei beabstandet angeordnete gegenüberliegende Wandungen aufweist, wobei die eine Wandung der zwei Wandungen eine erste Durchgangsöffnung und die andere Wandung der zwei Wandungen eine der ersten Durchgangsöffnung in einer axialen Richtung gegenüberliegende zweite Durchgangsöffnung aufweist. Weiterhin weist die Anordnung ein Versteifungselement auf, wobei das Versteifungselement einen Kopfabschnitt und einen in einer axialen Richtung des Versteifungselements an den Kopfabschnitt angrenzenden Schaft aufweist, wobei der Kopfabschnitt einen größeren Außendurchmesser als die erste Durchgangsöffnung aufweist, wobei der Schaft die erste Durchgangsöffnung und die zweite Durchgangsöffnung durchsetzt. Der Kopfabschnitt ist auf einer der anderen Wandung abgewandten Seite der einen Wandung angeordnet. Dabei ist es auch durchaus denkbar, dass der Kopfabschnitt auf einer der anderen Wandung abgewandten Seite der einen Wandung in der axialen Richtung bündig mit der einen Wandung abschließt. Das Versteifungselement weist einen in dem Schaft ausgebildeten Schließkopf auf, wobei das Versteifungselement eine das Versteifungselement in der axialen Richtung durchsetzende Durchgangsöffnung zur Aufnahme eines die Durchgangsöffnung des Versteifungselements durchsetzenden Befestigungsmittels aufweist. Im Gegensatz zu der vorher beschriebenen Lösung ist der Schließkopf nicht in dem Zwischenbereich zwischen den zwei Wandungen ausgebildet, sondern auf einer dem Kopfabschnitt abgewandten Seite der anderen Wandung der zwei Wandungen ausgebildet.

Zumindest der Schließkopf des Versteifungselements steht somit auf einer der einen Wandung abgewandten Seite der anderen Wandung gegenüber der anderen Wandung in der axialen Richtung hervor, wodurch sich wiederum die bereits beschriebenen Vorteile bei einer Krafteinwirkung des Befestigungsmittels ergeben.

Mittels des Kopfabschnitts und des Schließkopfes ist das Versteifungselement verliersicher in dem Hohlkörper gehalten.

In einer bevorzugten Ausführungsform kontaktiert der Kopfabschnitt die eine Wandung und der Schließkopf kontaktiert die andere Wandung auf der dem Kopfabschnitt abgewandten Seite. Dadurch ist das Versteifungselement klemmend in dem Hohlkörper gehalten.

In einer bevorzugten Ausführungsform weist die erste Durchgangsöffnung des Hohlkörpers einen größeren Durchmesser als die zweite Durchgangsöffnung des Hohlkörpers auf, wobei der Schaft des Versteifungselements einen Anlageabschnitt aufweist, wobei der Anlageabschnitt zwischen dem Kopfabschnitt und dem Schließkopf ausgebildet ist, wobei der Anlageabschnitt in der axialen Richtung auf einer der einen Wandung zugewandten Seite an der anderen Wandung anliegt.

In einer bevorzugten Ausführungsform einer der vorgenannten Anordnungen weist die Anordnung ein Befestigungsmittel auf, wobei das Befestigungsmittel die Durchgangsöffnung des Versteifungselements durchsetzt, wobei das Befestigungsmittel auf den einander abgewandten Seiten der zwei Wandungen jeweils ein Anschlagselement aufweist, wobei das eine Anschlagselement gegenüber dem anderen Anschlagselement in der axialen Richtung verstellbar ist. Bei dem Befestigungsmittel handelt es sich beispielsweise um eine Schraube-Mutter-Anordnung oder einen Gewindestab mit zwei Muttern, wobei die jeweilige Mutter eines der Anschlagselemente bildet.

Dabei ist es durchaus denkbar, dass es sich bei der Mutter um eine Schweißmutter oder eine Käfigmutter handelt, die mit dem Versteifungselement oder einer der Wandungen mittels einer Schweißverbindung verbunden ist.

Als besonders vorteilhaft wird es angesehen, wenn ein im Bereich der Durchgangsöffnung des Versteifungselements angeordneter Abschnitt des Befestigungsmittels einen geringeren Außendurchmesser als die Durchgangsöffnung des Versteifungselements aufweist. Dies hat den Vorteil, dass das Befestigungsmittel radial verschiebbar in dem Versteifungselement angeordnet ist, wodurch ein Toleranzausgleich in der radialen Richtung möglich ist.

Als besonders vorteilhaft wird es angesehen, wenn das Befestigungsmittel und das Versteifungselement nicht miteinander in Eingriff sind, insbesondere in der radialen Richtung kein Formschluss zwischen dem Befestigungsmittel und dem Versteifungselement besteht, wodurch bei einem Anziehen des Befestigungsmittels mittels Drehens des Befestigungsmittels keine Torsionskräfte in das Versteifungselement eingebracht werden. Dadurch wird vermieden, dass sich das Blindnietelement in beim Anziehen mittels Drehens des Befestigungsmittels mit dreht. Dadurch wird eine mögliche Beschädigung der Wandung des Hohlkörpers durch Mitdrehen des Versteifungselements vermieden.

Die Befestigung eines weiteren Bauteils an dem Hohlkörper erfolgt vorzugsweise derart, dass das weitere Bauteil zwischen einem der Anschlagselemente des Befestigungsmittels und dem Versteifungselement klemmend gehalten ist.

Ein Verfahren zur Herstellung einer Anordnung nach Anspruch 1 oder 2 weist die folgenden Verfahrensschritte auf:
a) Bereitstellen eines Hohlkörpers, wobei der Hohlkörper zwei beabstandet angeordnete, gegenüberliegende Wandungen aufweist, wobei die eine Wandung der zwei Wandungen eine erste Durchgangsöffnung und die andere Wandung der zwei Wandungen eine der ersten Durchgangsöffnung in einer axialen Richtung gegenüberliegende zweite Durchgangsöffnung aufweist,
b) Bereitstellen eines Versteifungselements, wobei das Versteifungselement einen Kopfabschnitt und einen in einer axialen Richtung des Versteifungselements an den Kopfabschnitt angrenzenden Schaft aufweist, wobei der Schaft einen Verformungsabschnitt aufweist, wobei der Kopfabschnitt einen größeren Außendurchmesser als der Schaft aufweist, wobei eine Wandung des Schafts im Bereich des Verformungsabschnitts eine Schwächung aufweist, zur Ausbildung eines Schließkopfes auf einer dem Kopfabschnitt abgewandten Seite der einen Wandung der zwei Wandungen nach einem Verformen des Verformungsabschnitts, wobei das Versteifungselement eine das Versteifungselement in der axialen Richtung durchsetzende Durchgangsöffnung zur Aufnahme eines die Durchgangsöffnung durchsetzenden Befestigungsmittels aufweist,
c) Einführen des Schafts des Versteifungselements in die beiden Wandungen derart, dass der Schaft die beiden Durchgangsöffnungen durchsetzt, wobei der Kopfabschnitt auf einer der anderen Wandung abgewandten Seite der einen Wandung angeordnet ist, wobei der Verformungsabschnitt in einem Zwischenraum zwischen der einen Wandung und der anderen Wandung angeordnet ist und der Schaft auf der der einen Wandung abgewandten Seite der anderen Wandung in der axialen Richtung hervorsteht,
d) Verformen des Verformungsabschnitts derart, dass dieser auf der dem Kopfabschnitt abgewandten Seite der einen Wandung durch Stauchung des Schafts den Schließkopf ausbildet, wobei nach dem Verformen der Schaft auf der der ersten Wandung abgewandten Seite der anderen Wandung gegenüber der anderen Wandung in der axialen Richtung hervorsteht oder in der axialen Richtung auf der der ersten Wandung abgewandten Seite der anderen Wandung bündig mit der anderen Wandung abschließt.

Die Durchgangsöffnung der jeweiligen Wandung kann beispielsweise mittels Bohren erzeugt werden. Dabei ist es durchaus denkbar, dass das Einbringen der Durchgangsöffnung erst zu dem Zeitpunkt erfolgt, an dem eine Verbindung des Hohlkörpers mit einem weiteren Bauteil erfolgen soll. Dies hat den Vorteil, dass nur wenn eine Versteifung benötigt wird und nur in dem Bereich des Hohlkörpers, in dem eine Versteifung benötigt wird, selektiv eine solche notwendige Versteifung mittels nachträglichem Einbringen des Versteifungselements gebildet werden kann.

Es ist durchaus denkbar, dass das Versteifungselement ein im Bereich des Schafts ausgebildetes Innengewinde aufweist. In diesem Fall kann das Verformen des Versteifungselements mittels eines Werkzeugs erfolgen, welches eine rotierbaren und axial verschiebbaren Gewindedorn aufweist. Hierzu wird der Gewindedorn in das Innengewinde des Versteifungselements eingeschraubt und dann axial so verschoben, dass eine Stauchung des Verformungsabschnitts erfolgt und sich somit der Schließkopf ausbildet.

Alternativ kann das Verformen des Verformungsabschnitts auch derart erfolgen, dass das in den Hohlkörper eingebrachte Versteifungselement zwischen zwei Anschlägen angeordnet wird und die beiden Anschläge anschließend in axialer Richtung aufeinander zu bewegt werden. Ein derartiges Verfahren hat weiterhin den Vorteil, dass mehrere Versteifungselemente in ein und demselben Verfahrensschritt verformt werden können, wodurch das Verfahren besonders zeitsparend wird. Das Verformen kann beispielsweise mittels eines Pressbalkens oder einer Pressbank erfolgen.

Die Verformung des Versteifungselements kann durchaus mittels eines schlagenden Einwirkens auf das Versteifungselement erreicht werden.

Es ist durchaus denkbar, dass das Verformen des Verformungsabschnitts mittels des Befestigungsmittels beim Anziehen des Befestigungsmittels erfolgt.

Ein Verfahren zur Herstellung einer Anordnung nach einem der Ansprüche 3 bis 5 weist die folgenden Verfahrensschritte auf:
a) Bereitstellen eines Hohlkörpers, wobei der Hohlkörper zwei beabstandet angeordnete, gegenüberliegende Wandungen aufweist, wobei die eine Wandung der zwei Wandungen eine erste Durchgangsöffnung und die andere Wandung der zwei Wandungen eine der ersten Durchgangsöffnung in einer axialen Richtung gegenüberliegende zweite Durchgangsöffnung aufweist,
b) Bereitstellen eines Versteifungselements, wobei das Versteifungselement einen Kopfabschnitt und einen in einer axialen Richtung des Versteifungselements an den Kopfabschnitt angrenzenden Schaft aufweist, wobei der Schaft einen Verformungsabschnitt aufweist, wobei der Kopfabschnitt einen größeren Außendurchmesser als der Schaft aufweist, wobei eine Wandung des Schafts im Bereich des Verformungsabschnitts eine Schwächung aufweist, zur Ausbildung eines Schließkopfes auf einer dem Kopfabschnitt abgewandten Seite der anderen Wandung der zwei Wandungen nach einem Verformen des Verformungsabschnitts, wobei das Versteifungselement eine das Versteifungselement in der axialen Richtung durchsetzende Durchgangsöffnung zur Aufnahme eines die Durchgangsöffnung durchsetzenden Befestigungsmittels aufweist,
c) Einführen des Schafts des Versteifungselements in die beiden Wandungen derart, dass der Schaft die beiden Durchgangsöffnungen durchsetzt, wobei der Kopfabschnitt auf einer der anderen Wandung abgewandten Seite der einen Wandung angeordnet ist, wobei der Verformungsabschnitt auf der der einen Wandung abgewandten Seite der anderen Wandung angeordnet ist,
d) Verformen des Verformungsabschnitts derart, dass dieser auf der dem Kopfabschnitt abgewandten Seite der anderen Wandung durch Stauchung des Schafts den Schließkopf ausbildet.

Das Verformen des Versteifungselements kann wiederum auf die vorher beschriebenen Arten erfolgen.

In einer vorteilhaften Weiterbildung des Verfahrens weist die erste Durchgangsöffnung einen größeren Durchmesser auf als die zweite Durchgangsöffnung. Der Schaft des Versteifungselements weist einen Anlageabschnitt auf, wobei der Anlageabschnitt zwischen dem Kopfabschnitt und dem Verformungsabschnitt ausgebildet ist, wobei der Anlageabschnitt einen größeren Außendurchmesser als der Verformungsabschnitt aufweist und wobei der Anlageabschnitt beim Vorgang des Einführens des Schafts in die beiden Wandungen in der axialen Richtung auf einer der einen Wandung zugewandten Seite an der anderen Wandung zur Anlage kommt. Dies hat den Vorteil, dass beim Vorgang des Verformens des Verformungsabschnitts sich die andere Wandung an dem Anlageabschnitt axial abstützt, wodurch eine Verformen der anderen Wandung bei Bildung des Schließkopfes vermieden wird.

Das Einbringen der ersten Durchgangsöffnung und der zweiten Durchgangsöffnung kann in diesem Fall in einfacher Art und Weise mittels eines Stufenbohrers oder eines Konusbohrers erfolgen.

Ein Versteifungselement zur Durchführung des vorgenannten Verfahrens weist einen Kopfabschnitt und einen in einer axialen Richtung des Versteifungselements an den Kopfabschnitt angrenzenden Schaft auf, wobei der Schaft einen Verformungsabschnitt aufweist, wobei der Kopfabschnitt einen größeren Außendurchmesser als der Schaft aufweist. Eine Wandung des Schafts weist im Bereich des Verformungsabschnitts eine Schwächung auf, zur Bildung eines Schließkopfes auf einer dem Kopfabschnitt abgewandten Seite der anderen Wandung der zwei Wandungen nach einem Verformen des ersten Verformungsabschnitts. Das Versteifungselement weist eine das Versteifungselement in der axialen Richtung durchsetzende Durchgangsöffnung zur Aufnahme eines die Durchgangsöffnung durchsetzenden Befestigungsmittels auf. Der Schaft weist des Weiteren einen Anlageabschnitt auf, wobei der Anlageabschnitt zwischen dem Kopfabschnitt und dem Verformungsabschnitt ausgebildet ist und wobei der Anlageabschnitt einen größeren Außendurchmesser als der Verformungsabschnitt aufweist.

Unabhängig davon, ob das Versteifungselement zur Bildung der Anordnung mit einem Schließkopf zwischen den beiden Wandabschnitten oder zur Bildung der Anordnung mit einem Schließkopf auf der der einen Wandung abgewandten Seite der anderen Wandung dient, wird es als besonders vorteilhaft angesehen, wenn der Schaft in einem zentralen Umfangsbereich des Verformungsabschnitts eine Schwächung der Wandung mittels mehrerer Löcher im Schaft aufweist, zur Ausbildung des Schließkopfes in Form eines umlaufenden Wulsts nach dem Verformen des Verformungsabschnitts.

Weiterhin wird es unabhängig von der zu bildenden Anordnung wird es als vorteilhaft angesehen, wenn die Wandung im Bereich des Verformungsabschnitts eine geringere Wandstärke aufweist als in einem in Richtung des Kopfabschnitts an den Verformungsabschnitt angrenzenden Bereich des Schafts.

Unabhängig von der zu bildenden Anordnung ist das Versteifungselement vorzugsweise einstückig ausgebildet.

Unabhängig von der zu bildenden Anordnung weist das Material des Versteifungselements vorzugsweise eine größere Härte auf als das Material der Wandungen.

In einer bevorzugten Ausführungsform ist der Schaft des Versteifungselements unabhängig von der zu bildenden Anordnung frei von einem Innengewinde.

In einer bevorzugten Ausführungsform besteht das Versteifungselement unabhängig von der zu bildenden Anordnung aus einem Metall oder einer Metalllegierung.

Der Kopfabschnitt des Versteifungselements kann unabhängig von der zu bildenden Anordnung unterschiedlich gestaltet sein. Beispielsweise kann der Kopfabschnitt eine relativ große Abmessung in der radialen Richtung aufweisen, um Fertigungstoleranzen auszugleichen. Der Kopfabschnitt kann auch durchaus als Schneidkopf ausgebildet sein, wodurch die Bildung eines bündigen Abschlusses zwischen der einen Wandung und dem Kopfabschnitt bzw. ein nur geringer Überstand des Kopfabschnitts gegenüber der einen Wandung begünstigt wird.

Der Kopfabschnitt des Versteifungselements kann ferner unterschiedlich ausgebildet sein, beispielsweise bezogen auf eine Schnittführung in der Längsachse des Versteifungselements, sehr flach, insbesondere mit trapezförmigem Querschnitt, der sich zum freien Ende des Kopfabschnitts erweitert, oder mit einem rechteckigen Querschnitt. Der Kopfabschnitt kann, in einer Ebene senkrecht zur Längsachse des Versteifungselements geschnitten, unterschiedlichen Querschnitt aufweisen, vorzugsweise einen kreisförmigen, viereckigen oder mehreckigen, insbesondere gleichmäßig viereckigen oder gleichmäßig sechseckigen Querschnitt aufweisen.

In den Figuren ist die Erfindung anhand mehrerer Ausführungsformen dargestellt, ohne hierauf beschränkt zu sein.

Es zeigt:
- Fig. 1: eine erfindungsgemäße Anordnung von einem Hohlkörper und einem Versteifungselement, in einer Ansicht gemäß dem Pfeil I in Fig. 2,
- Fig. 2: die Anordnung in einer Ansicht gemäß dem Pfeil II in Fig. 1,
- Fig. 3: die Anordnung in einer Schnittansicht gemäß der Linie III-III in Fig. 1
- Fig. 4: das Versteifungselement gemäß Fig. 1 in einer Schnittansicht,
- Fig. 5: eine Ausführungsform einer Anordnung von einem Hohlkörper und einem Versteifungselement, in einer Schnittansicht wie in Fig. 1,
- Fig. 6: eine erfindungsgemäße Anordnung von einem Hohlkörper und einem in den Hohlkörper eingebrachten Versteifungselement in einer Schnittansicht wie in Fig. 1,
- Fig. 7: das Versteifungselement gemäß Fig. 6 in einer Schnittansicht,
- Fig. 8: ein modifiziertes Versteifungselement in einer Schnittansicht gemäß Fig. 7,
- Fig. 9: eine Ansicht des Versteifungselements gemäß Fig. 8, in Richtung des Kopfabschnitts gesehen.

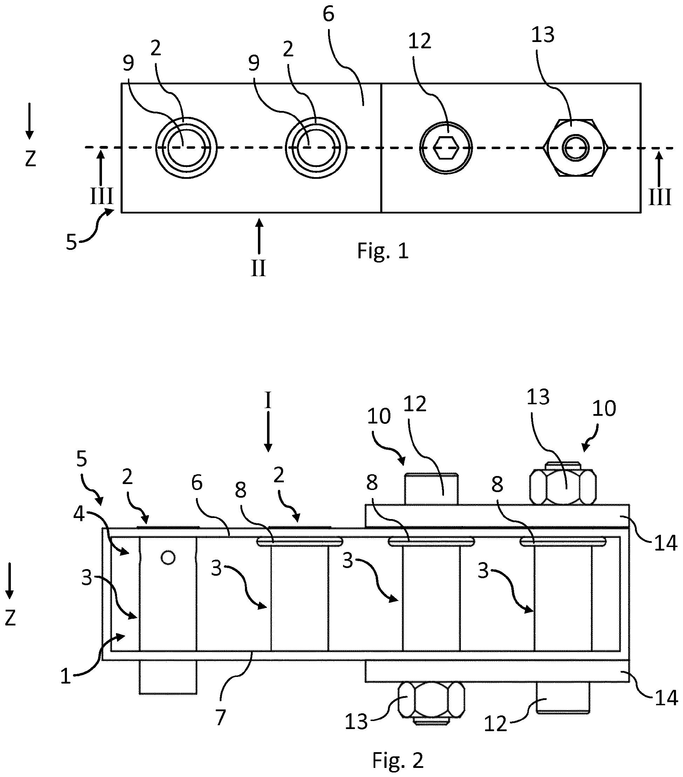

Die in den Fig. 1 bis 3 dargestellte Anordnung weist einen Hohlkörper 5 auf, wobei der Hohlkörper 5 zwei beabstandet angeordnete, gegenüberliegende Wandungen 6, 7 aufweist. In den Hohlkörper 5 sind vier Versteifungselemente 1 eingebracht, wobei das jeweilige Versteifungselement 1 eine erste Durchgangsöffnung, welche in der einen Wandung 6 der zwei Wandungen 6, 7 ausgebildet ist und eine der ersten Durchgangsöffnung in einer axialen Richtung Z gegenüberliegende zweite Durchgangsöffnung, welche in der anderen Wandung 7 der zwei Wandungen 6, 7 ausgebildet ist, durchsetzt.

Die vier dargestellten Versteifungselemente 1 sind dabei identisch ausgebildet, wobei in den Fig. 1 bis 3 das erste von links dargestellte Versteifungselement 1 das Versteifungselement 1 vor einem Verformen eines Verformungsabschnitts 4 zeigt. Dieses unverformte Versteifungselement 1 weist einen Kopfabschnitt 2 und einen in einer axialen Richtung Z des Versteifungselements 1 an den Kopfabschnitt 2 angrenzenden Schaft 3 auf. Der Schaft 3 weist den Verformungsabschnitt 4 auf, wobei der Kopfabschnitt 2 einen größeren Außendurchmesser als der Schaft 3 aufweist. Eine Wandung des Schafts 3 weist im Bereich des Verformungsabschnitts 4 eine Schwächung auf, zur Bildung eines Schließkopfes 8 auf einer dem Kopfabschnitt 2 abgewandten Seite der einen Wandung 6 der zwei Wandungen 6, 7 nach einem Verformen des Verformungsabschnitts 4. Im Bereich des Verformungsabschnitts 4 weist die Wandung des Schafts 3 vier die Wandung radial durchsetzende Löcher auf, zur Ausbildung des Schließkopfes 8 in Form eines umlaufenden Wulsts nach dem Verformen des Verformungsabschnitts 4. Das Versteifungselement 1 weist eine das Versteifungselement 1 in der axialen Richtung Z durchsetzende Durchgangsöffnung 9 zur Aufnahme eines die Durchgangsöffnung 9 durchsetzenden Befestigungsmittels 10 auf.

Das unverformte Versteifungselement 1 ist derart in die beiden Wandungen 6, 7 eingebracht, dass der Schaft 3 die beiden Durchgangsöffnungen durchsetzt, wobei der Kopfabschnitt 2 auf einer der anderen Wandung 7 abgewandten Seite der einen Wandung 6 angeordnet ist, wobei der Verformungsabschnitt 4 in einem Zwischenraum zwischen der einen Wandung 6 und der anderen Wandung 7 angeordnet ist und wobei der Schaft 3 auf der der einen Wandung 6 abgewandten Seite der anderen Wandung 7 in der axialen Richtung Z gegenüber der anderen Wandung 7 hervorsteht.

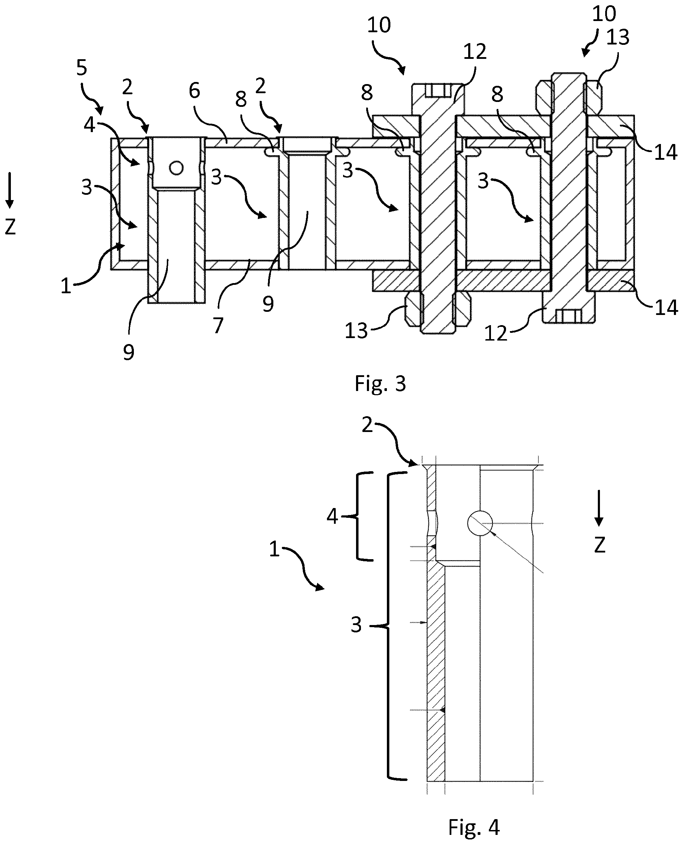

Um das Versteifungselement 1 verliersicher in dem Hohlkörper 5 zu halten, wird der Verformungsabschnitt 4 derart verformt, dass dieser auf der dem Kopfabschnitt 2 abgewandten Seite der einen Wandung 6 durch Stauchung des Schafts 3 den Schließkopf 8 ausbildet, wobei nach dem Verformen der Schaft 3 auf der der ersten Wandung 6 abgewandten Seite der anderen Wandung 7 in der axialen Richtung Z bündig mit der anderen Wandung 7 abschließt. Diesen Zustand zeigen die drei übrigen in den Fig. 2 und 3 dargestellten Versteifungselemente 1. Bei den verformten Versteifungselementen 1 kontaktiert der jeweilige Kopfabschnitt 2 die eine Wandung 6 und der jeweilige Schließkopf 8 kontaktiert die eine Wandung 6 auf der dem Kopfabschnitt 2 abgewandten Seite, wodurch das jeweilige Versteifungselement 1 klemmend in der einen Wandung 6 gehalten ist.

In den beiden rechten Versteifungselementen 1 der Fig. 2 und 3 ist jeweils ein Befestigungsmittel 10 eingebracht, wobei das Befestigungsmittel 10 die Durchgangsöffnung 9 des jeweiligen Versteifungselements 1 durchsetzt. Die Befestigungsmittel 10 sind identisch ausgebildet und sind bezüglich des jeweiligen Versteifungselements 1 entgegengesetzt orientiert in das Versteifungselement 1 eingebracht. Das jeweilige Befestigungsmittel 10 weist auf den einander abgewandten Seiten der zwei Wandungen 6, 7 jeweils ein Anschlagselement 12, 13 auf, wobei das eine Anschlagselement 12 gegenüber dem anderen Anschlagselement 13 in der axialen Richtung Z verstellbar ist. Vorliegend ist das Befestigungsmittel 10 durch eine Schraube-Mutter-Anordnung gebildet, wobei der Schraubenkopf das eine Anschlagselement 12 und die Mutter das andere Anschlagselement 13 bildet. Mit dem Hohlkörper 5 sind zwei weitere Bauteile 14 verbunden. Das Verbinden der weiteren Bauteile 14 mit dem Hohlkörper 5 erfolgt dabei mittels der Befestigungsmittel 10, wobei das jeweilige weitere Bauteil 14 zwischen einem der Anschlagselemente 12, 13 des jeweiligen Befestigungsmittels 10 und dem jeweiligen Versteifungselement 1 klemmend gehalten ist.

Da der Kopfabschnitt 2 des jeweiligen Versteifungselements 1 in der axialen Richtung Z gegenüber der einen Wandung 6 hervorsteht, und der Schaft 3 in der axialen Richtung Z bündig mit der anderen Wandung 7 abschließt, werden die beim Anziehen des Befestigungsmittels 10 aufgebrachten axialen Kräfte vollständig auf das jeweilige Versteifungselement 1 übertragen, sodass eine Verformung der Wandungen 6, 7 des Hohlkörpers 5 vermieden wird.

Die Fig. 4 zeigt das in den Fig. 1 bis 3 dargestellte Versteifungselement 1 in einem unverformten Zustand, in einer teilweise geschnittenen Ansicht.

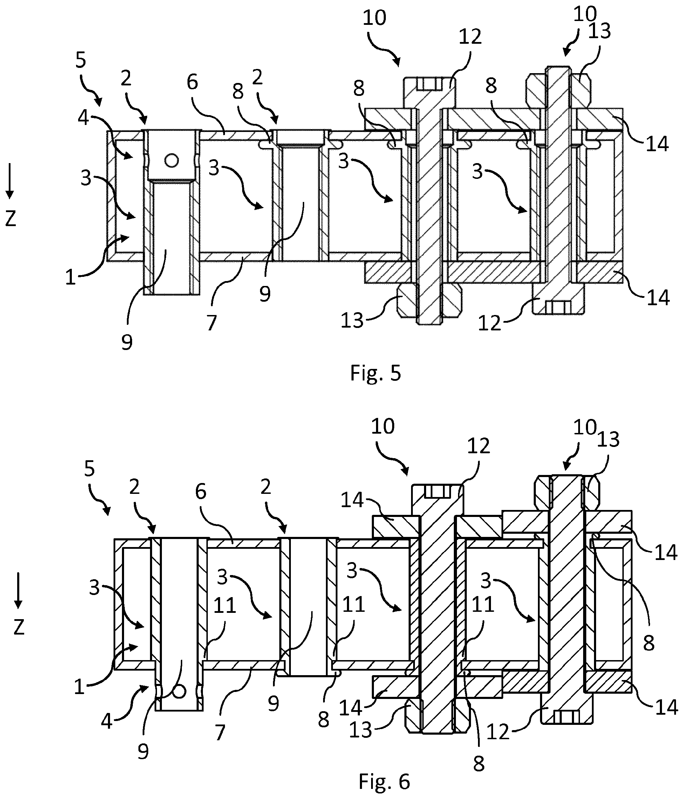

Die in der Fig. 5 dargestellte Anordnung unterscheidet sich von der in den Fig. 1 bis 3 dargestellten Anordnung im Wesentlichen dadurch, dass das jeweilige Versteifungselement 1 ein im Bereich des Schafts 3 ausgebildetes Innengewinde aufweist. Dadurch kann die Verformung des Verformungsabschnitts 4 mittels eines Setzwerkzeugs mit einem Gewindedorn in der bereit beschriebenen Art und Weise erfolgen.

Wie der Fig. 5 zu entnehmen ist, weist ein im Bereich der Durchgangsöffnung 9 des jeweiligen Versteifungselements 1 angeordneter Abschnitt des Befestigungsmittels 10 einen geringeren Außendurchmesser als die Durchgangsöffnung des Versteifungselements 1 auf. Dies ermöglicht zum einen einen Toleranzausgleich in der radialen Richtung. Weiterhin wird das Einbringen von Torsionskräften in das Versteifungselement 1 beim Anziehen des als Schraube-Mutter-Anordnung ausgebildeten Befestigungsmittels 10 vermieden.

Die Fig. 6 zeigt wiederum eine Anordnung, wobei sich diese Anordnung von den in den vorigen Darstellungen gezeigten Anordnung im Wesentlichen durch die Gestaltung der Versteifungselemente 1 und die Durchgangsöffnungen der Wandungen 6, 7 des Hohlkörpers 5 unterscheidet.

Das unverformte Versteifungselement 1 weist wiederum einen Kopfabschnitt 2 und einen in einer axialen Richtung Z des Versteifungselements 1 an den Kopfabschnitt 2 angrenzenden Schaft 3 auf. Der Schaft 3 weist einen Verformungsabschnitt 4 auf, wobei der Kopfabschnitt 2 einen größeren Außendurchmesser als der Schaft 3 aufweist. Eine Wandung des Schafts 3 weist im Bereich des Verformungsabschnitts 4 eine Schwächung auf, zur Ausbildung eines Schließkopfes 8 auf einer dem Kopfabschnitt 2 abgewandten Seite der anderen Wandung 7 der zwei Wandungen 6, 7 nach einem Verformen des Verformungsabschnitts 4. Das Versteifungselement 1 weist eine das Versteifungselement 1 in der axialen Richtung Z durchsetzende Durchgangsöffnung 9 zur Aufnahme eines die Durchgangsöffnung 9 durchsetzenden Befestigungsmittels 10 auf. Weiterhin weist der Schaft 3 einen Anlageabschnitt 11 auf, wobei der Anlageabschnitt 11 zwischen dem Kopfabschnitt 2 und dem Verformungsabschnitt 4 ausgebildet ist, wobei der Anlageabschnitt 11 einen größeren Außendurchmesser als der Verformungsabschnitt 4 aufweist. Das in der Fig. 6 links darstellte, unverformte Versteifungselement 1 ist derart in die beiden Wandungen 6, 7 eingeführt, dass der Schaft 3 die beiden Durchgangsöffnungen durchsetzt, wobei der Kopfabschnitt 2 auf einer der anderen Wandung 7 abgewandten Seite der einen Wandung 6 angeordnet ist, wobei der Verformungsabschnitt 4 auf der der einen Wandung 6 abgewandten Seite der anderen Wandung 7 angeordnet ist. Dabei weist die erste Durchgangsöffnung einen Durchmesser auf, der größer ist als der Außendurchmesser des Anlageabschnitts 11, und die zweite Durchgangsöffnung weist einen Durchmesser auf, der kleiner ist als der Außendurchmesser des Anlageabschnitts 11. Beim Vorgang des Einführens des Schafts 3 in die beiden Wandungen 6, 7 kommt der Anlageabschnitt 11 in der axialen Richtung Z auf einer der einen Wandung 6 zugewandten Seite an der anderen Wandung 7 zur Anlage. Dies hat den Vorteil, dass beim Verformen des Verformungsabschnitts 4 der Anlageabschnitt 11 für die Wandung 7 ein Gegenlager bildet, wodurch ein Verformen der Wandung 7 durch die auf die andere Wandung 7 in axialer Richtung einwirkenden Kräfte, welche beim Verformen sich bildenden Schließkopf 8 auftreten, vermieden wird.

Die in die beiden in der Fig. 6 rechts dargestellten Versteifungselemente 1 eingeführten Befestigungsmittel 10 sind identisch ausgebildet und sind bezüglich des Hohlkörpers 5 entgegengesetzt orientiert in das Versteifungselement 1 eingebracht. Die beiden in der Fig. 6 rechts dargestellten Versteifungselemente 1 sind entgegengesetzt orientiert in der Hohlkörper 5 eingebracht.

Wie bei den vorigen Ausführungsbeispielen beschrieben, werden die von dem Befestigungsmittel 10 in der axialen Richtung Z einwirkenden Druckkräfte lediglich auf das Versteifungselement 1 übertragen, wodurch ein Verformen der Wandungen 6, 7 des Hohlkörpers 5 oder gar eine Beschädigung der Wandungen 6, 7 des Hohlkörpers 5 vermieden wird.

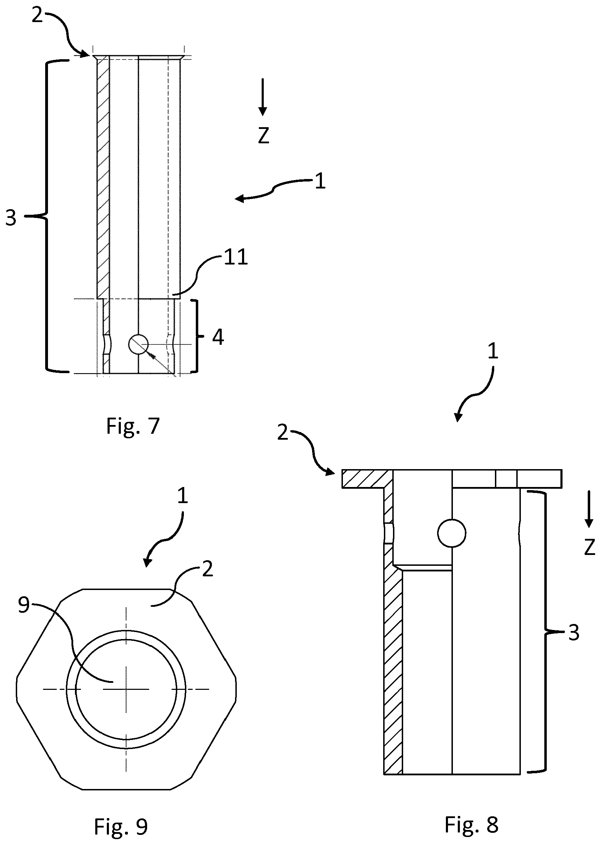

Die Fig. 7 zeigt das in der Fig. 6 ganz links gezeigte, unverformte Versteifungselement 1 in einer teilweise geschnittenen Ansicht.

Fig. 8 zeigt eine abgewandelte Ausführungsform des Versteifungselements 1. Dieses ist entsprechend dem Versteifungselement gemäß Fig. 4 ausgebildet, allerdings mit einem abgewandelten Kopfabschnitt 2. Der Kopfabschnitt 2 ist gegenüber demjenigen der Fig. 4 stärker ausgebildet und weist eine konstante Wandstärke auf, gesehen in Längserstreckung des Versteifungselements 1. Die radiale Außenkontur des Kopfabschnitts 2 bildet, wie der Darstellung in Fig. 9 zu entnehmen ist, ein gleichmäßiges Sechseck mit abgeflachten Ecken. Aus dieser Gestaltung ergibt sich einerseits eine größere Kontaktfläche von Kopfabschnitt 2 und Wandung 6 beziehungsweise Wandung 7 und überdies die Möglichkeit, durch Eingriff eines komplementären Körpers, insbesondere eines Werkzeugs, einen Formschluss dessen komplementär gestalteter sechseckiger Aufnahme mit dem sechseckig gestalteten Kopfabschnitt 2 herbeizuführen.

### Bezugszeichenliste

- 1: Versteifungselement
- 2: Kopfabschnitt
- 3: Schaft
- 4: Verformungsabschnitt
- 5: Hohlkörper
- 6: Wandung
- 7: andere Wandung
- 8: Schließkopf
- 9: Durchgangsöffnung
- 10: Befestigungsmittel
- 11: Anlageabschnitt
- 12: Anschlagselement
- 13: anderes Anschlagselement
- 14: Bauteil

- Z: axiale Richtung

## Patentansprüche

1. Anordnung aufweisend einen Hohlkörper (5), wobei der Hohlkörper (5) zwei beabstandet angeordnete, gegenüberliegende Wandungen (6, 7) aufweist, wobei die eine Wandung (6) der zwei Wandungen (6, 7) eine erste Durchgangsöffnung und die andere Wandung (7) der zwei Wandungen (6, 7) eine der ersten Durchgangsöffnung in einer axialen Richtung (Z) gegenüberliegende zweite Durchgangsöffnung aufweist, und aufweisend ein Versteifungselement (1), wobei das Versteifungselement (1) einen Kopfabschnitt (2) und einen in einer axialen Richtung (Z) des Versteifungselements (1) an den Kopfabschnitt (2) angrenzenden Schaft (3) aufweist, wobei der Kopfabschnitt (2) einen größeren Außendurchmesser als die erste Durchgangsöffnung aufweist, wobei der Schaft (3) die erste Durchgangsöffnung und die zweite Durchgangsöffnung durchsetzt, wobei der Kopfabschnitt (2) auf einer der anderen Wandung (7) abgewandten Seite der einen Wandung (6) angeordnet ist, wobei das Versteifungselement (1) einen in dem Schaft (3) ausgebildeten Schließkopf (8) aufweist, wobei der Schließkopf (8) in einem Zwischenbereich zwischen der einen Wandung (6) und der anderen Wandung (7) ausgebildet ist, wobei das Versteifungselement (1) eine das Versteifungselement (1) in der axialen Richtung (Z) durchsetzende Durchgangsöffnung (9) zur Aufnahme eines die Durchgangsöffnung (9) des Versteifungselements (1) durchsetzenden Befestigungsmittels (10) aufweist, **dadurch gekennzeichnet, dass** das Versteifungselement (1) auf einer der einen Wandung (6) abgewandten Seite der anderen Wandung (7) gegenüber der anderen Wandung (7) in der axialen Richtung (Z) hervorsteht oder bündig mit der anderen Wandung (7) abschließt.

2. Anordnung nach Anspruch 1, **dadurch gekennzeichnet, dass** der Kopfabschnitt (2) die eine Wandung (6) kontaktiert und der Schließkopf (8) die eine Wandung (6) auf der dem Kopfabschnitt (2) abgewandten Seite kontaktiert.

3. Anordnung aufweisend einen Hohlkörper (5), wobei der Hohlkörper (5) zwei beabstandet angeordnete, gegenüberliegende Wandungen (6, 7) aufweist, wobei die eine Wandung (6) der zwei Wandungen (6, 7) eine erste Durchgangsöffnung und die andere Wandung (7) der zwei Wandungen (6, 7) eine der ersten Durchgangsöffnung in einer axialen Richtung (Z) gegenüberliegende zweite Durchgangsöffnung aufweist, und aufweisend ein Versteifungselement (1), wobei das Versteifungselement (1) einen Kopfabschnitt (2) und einen in einer axialen Richtung (Z) des Versteifungselements (1) an den Kopfabschnitt (2) angrenzenden Schaft (3) aufweist, wobei der Kopfabschnitt (2) einen größeren Außendurchmesser als die erste Durchgangsöffnung aufweist, wobei der Schaft (3) die erste Durchgangsöffnung und die zweite Durchgangsöffnung durchsetzt, wobei der Kopfabschnitt (2) auf einer der anderen Wandung (7) abgewandten Seite der einen Wandung (6) angeordnet ist, wobei das Versteifungselement (1) einen in dem Schaft (3) ausgebildeten Schließkopf (8) aufweist, wobei das Versteifungselement (1) eine das Versteifungselement (1) in der axialen Richtung (Z) durchsetzende Durchgangsöffnung (9) zur Aufnahme eines die Durchgangsöffnung (9) des Versteifungselements (1) durchsetzenden Befestigungsmittels (10) aufweist, **dadurch gekennzeichnet, dass** der Schließkopf (8) auf einer dem Kopfabschnitt (2) abgewandten Seite der anderen Wandung (7) der zwei Wandungen (6, 7) ausgebildet ist.

4. Anordnung nach Anspruch 3, **dadurch gekennzeichnet, dass** der Kopfabschnitt (2) die eine Wandung (6) kontaktiert und der Schließkopf (8) die andere Wandung (7) auf der dem Kopfabschnitt (2) abgewandten Seite kontaktiert.

5. Anordnung nach Anspruch 3 oder 4, **dadurch gekennzeichnet, dass** die erste Durchgangsöffnung einen größeren Durchmesser als die zweite Durchgangsöffnung aufweist, wobei der Schaft (3) des Versteifungselements (1) einen Anlageabschnitt (11) aufweist, wobei der Anlageabschnitt (11) zwischen dem Kopfabschnitt (2) und dem Schließkopf (8) ausgebildet ist, wobei der Anlageabschnitt (11) in der axialen Richtung (Z) auf einer der einen Wandung (6) zugewandten Seite an der anderen Wandung (7) anliegt.

6. Anordnung nach einem der Ansprüche 1 bis 5, **dadurch gekennzeichnet, dass** die Anordnung ein Befestigungsmittel (10) aufweist, wobei das Befestigungsmittel (10) die Durchgangsöffnung (9) des Versteifungselements (1) durchsetzt, wobei das Befestigungsmittel (10) auf den einander abgewandten Seiten der zwei Wandungen (6, 7) jeweils ein Anschlagselement (12, 13) aufweist, wobei das eine Anschlagselement (12) gegenüber dem anderen Anschlagselement (13) in der axialen Richtung (Z) verstellbar ist.

7. Anordnung nach Anspruch 6, **dadurch gekennzeichnet, dass** das ein im Bereich der Durchgangsöffnung (9) des Versteifungselements (1) angeordneter Abschnitt des Befestigungsmittels (10) einen geringeren Außendurchmesser als die Durchgangsöffnung des Versteifungselements (1) aufweist.

8. Anordnung nach Anspruch 6 oder 7, **dadurch gekennzeichnet, dass** die Anordnung ein weiteres Bauteil (14) aufweist, wobei das weitere Bauteil (14) zwischen einem der Anschlagselemente (12, 13) des Befestigungsmittels (10) und dem Versteifungselement (1) klemmend gehalten ist.

9. Anordnung nach einem der Ansprüche 1 - 8, **dadurch gekennzeichnet, dass** das Versteifungselement (1), in einem Schnitt durch das Versteifungselement (1) im Bereich einer Mittellängsachse des Versteifungselements (1), einen im Querschnitt trapezförmigen Kopfabschnitt (2), der sich zum freien Ende des Kopfabschnitts (2) erweitert, oder einen im Querschnitt rechteckigen Kopfabschnitt (2) aufweist.

10. Anordnung nach einem der Ansprüche 1 - 9, **dadurch gekennzeichnet, dass** der Kopfabschnitt (2), in einer Ebene senkrecht zur axialen Richtung (Z) des Versteifungselements (1) geschnitten, kreisförmig, viereckig oder mehreckig, insbesondere gleichmäßig viereckig oder gleichmäßig sechseckig ausgebildet ist.

11. Verfahren zur Herstellung einer Anordnung nach Anspruch 1 oder 2 aufweisend die folgenden Verfahrensschritte:
a) Bereitstellen eines Hohlkörpers (5), wobei der Hohlkörper (5) zwei beabstandet angeordnete, gegenüberliegende Wandungen (6, 7) aufweist, wobei die eine Wandung (6) der zwei Wandungen (6, 7) eine erste Durchgangsöffnung und die andere Wandung (7) der zwei Wandungen (6, 7) eine der ersten Durchgangsöffnung in einer axialen Richtung (Z) gegenüberliegende zweite Durchgangsöffnung aufweist,
b) Bereitstellen eines Versteifungselements (1), wobei das Versteifungselement (1) einen Kopfabschnitt (2) und einen in einer axialen Richtung (Z) des Versteifungselements (1) an den Kopfabschnitt (2) angrenzenden Schaft (3) aufweist, wobei der Schaft (3) einen Verformungsabschnitt (4) aufweist, wobei der Kopfabschnitt (2) einen größeren Außendurchmesser als der Schaft (3) aufweist, wobei eine Wandung des Schafts (3) im Bereich des Verformungsabschnitts (4) eine Schwächung aufweist, zur Ausbildung eines Schließkopfes (8) auf einer dem Kopfabschnitt (2) abgewandten Seite der einen Wandung (6) der zwei Wandungen (6, 7) nach einem Verformen des Verformungsabschnitts (4), wobei das Versteifungselement (1) eine das Versteifungselement (1) in der axialen Richtung (Z) durchsetzende Durchgangsöffnung (9) zur Aufnahme eines die Durchgangsöffnung (9) durchsetzenden Befestigungsmittels (10) aufweist,
c) Einführen des Schafts (3) des Versteifungselements (1) in die beiden Wandungen (6, 7) derart, dass der Schaft (3) die beiden Durchgangsöffnungen durchsetzt, wobei der Kopfabschnitt (2) auf einer der anderen Wandung (7) abgewandten Seite der einen Wandung (6) angeordnet ist, wobei der Verformungsabschnitt (4) in einem Zwischenraum zwischen der einen Wandung (6) und der anderen Wandung (7) angeordnet ist und der Schaft (3) auf der der einen Wandung (6) abgewandten Seite der anderen Wandung (7) in der axialen Richtung (7) hervorsteht,
d) Verformen des Verformungsabschnitts (4) derart, dass dieser auf der dem Kopfabschnitt (2) abgewandten Seite der einen Wandung (6) durch Stauchung des Schafts (3) den Schließkopf (8) ausbildet, wobei nach dem Verformen der Schaft (3) auf der der ersten Wandung (6) abgewandten Seite der anderen Wandung (7) gegenüber der anderen Wandung (7) in der axialen Richtung (Z) hervorsteht oder bündig mit der anderen Wandung (7) abschließt.

12. Verfahren zur Herstellung einer Anordnung nach einem der Ansprüche 3 bis 5 aufweisend die folgenden Verfahrensschritte:
a) Bereitstellen eines Hohlkörpers (5), wobei der Hohlkörper (5) zwei beabstandet angeordnete, gegenüberliegende Wandungen (6, 7) aufweist, wobei die eine Wandung (6) der zwei Wandungen (6, 7) eine erste Durchgangsöffnung und die andere Wandung (7) der zwei Wandungen (6, 7) eine der ersten Durchgangsöffnung in einer axialen Richtung (Z) gegenüberliegende zweite Durchgangsöffnung aufweist,
b) Bereitstellen eines Versteifungselements (1), wobei das Versteifungselement einen Kopfabschnitt (2) und einen in einer axialen Richtung (Z) des Versteifungselements (1) an den Kopfabschnitt (2) angrenzenden Schaft (3) aufweist, wobei der Schaft (3) einen Verformungsabschnitt (4) aufweist, wobei der Kopfabschnitt (2) einen größeren Außendurchmesser als der Schaft (3) aufweist, wobei eine Wandung des Schafts (3) im Bereich des Verformungsabschnitts (4) eine Schwächung aufweist, zur Ausbildung eines Schließkopfes (8) auf einer dem Kopfabschnitt (2) abgewandten Seite der anderen Wandung (7) der zwei Wandungen (6, 7) nach einem Verformen des Verformungsabschnitts (4), wobei das Versteifungselement (1) eine das Versteifungselement (1) in der axialen Richtung (Z) durchsetzende Durchgangsöffnung (9) zur Aufnahme eines die Durchgangsöffnung (9) durchsetzenden Befestigungsmittels (10) aufweist,
c) Einführen des Schafts (3) des Versteifungselements (1) in die beiden Wandungen (6, 7) derart, dass der Schaft (3) die beiden Durchgangsöffnungen durchsetzt, wobei der Kopfabschnitt (2) auf einer der anderen Wandung (7) abgewandten Seite der einen Wandung (6) angeordnet ist, wobei der Verformungsabschnitt (4) auf der der einen Wandung (6) abgewandten Seite der anderen Wandung (7) angeordnet ist,
d) Verformen des Verformungsabschnitts (4) derart, dass dieser auf der dem Kopfabschnitt (2) abgewandten Seite der anderen Wandung (7) durch Stauchung des Schafts (3) den Schließkopf (8) ausbildet.

13. Verfahren nach Anspruch 12, wobei die erste Durchgangsöffnung einen größeren Durchmesser aufweist als die zweite Durchgangsöffnung und wobei der Schaft (3) des Versteifungselements (1) einen Anlageabschnitt (11) aufweist, wobei der Anlageabschnitt (11) zwischen dem Kopfabschnitt (2) und dem Verformungsabschnitt (4) ausgebildet ist, wobei der Anlageabschnitt (11) einen größeren Außendurchmesser als der Verformungsabschnitt (4) aufweist, wobei der Anlageabschnitt (11) beim Vorgang des Einführens des Schafts (3) in die beiden Wandungen (6, 7) in der axialen Richtung (Z) auf einer der einen Wandung (6) zugewandten Seite an der anderen Wandung (7) zur Anlage kommt.

14. Versteifungselement (1) zur Durchführung des Verfahrens nach Anspruch 13, wobei das Versteifungselement (1) einen Kopfabschnitt (2) und einen in einer axialen Richtung (Z) des Versteifungselements (1) an den Kopfabschnitt (2) angrenzenden Schaft (3) aufweist, wobei der Schaft (3) einen Verformungsabschnitt (4) aufweist, wobei der Kopfabschnitt (2) einen größeren Außendurchmesser als der Schaft (3) aufweist, wobei eine Wandung des Schafts (3) im Bereich des Verformungsabschnitts (4) eine Schwächung aufweist, zur Ausbildung eines Schließkopfes (8) auf einer dem Kopfabschnitt (2) abgewandten Seite der anderen Wandung (7) der zwei Wandungen (6, 7) nach einem Verformen des Verformungsabschnitts (4), wobei das Versteifungselement (1) eine das Versteifungselement (1) in der axialen Richtung (Z) durchsetzende Durchgangsöffnung (9) zur Aufnahme eines die Durchgangsöffnung (9) durchsetzenden Befestigungsmittels (10) aufweist, wobei der Schaft (3) einen Anlageabschnitt (11) aufweist, **dadurch gekennzeichnet, dass** der Anlageabschnitt (11) zwischen dem Kopfabschnitt (2) und dem Verformungsabschnitt (4) ausgebildet ist, wobei der Anlageabschnitt (11) einen größeren Außendurchmesser als der Verformungsabschnitt (4) aufweist.
